# EUROPÄISCHE PATENTANMELDUNG

(11) **EP 0 888 883 A2**
(43) Veröffentlichungstag der Anmeldung: **07.01.1999**
(21) Anmeldenummer: 98112183.3
(22) Anmeldetag: 01.07.1998
(51) Int. Cl.: B32B 27/32, B32B 27/12

(54) **Polypropylenverbund**

(30) Priorität: 02.07.1997 DE 29711576 U
(71) Anmelder: Rico-Pack GmbH, 27299 Langwedel (DE)
(72) Erfinder: Poldervaart, Thomas, 27283 Verden (DE)
(74) Vertreter: Goddar, Heinz J., Dr.

(57) **Zusammenfassung**

Die Erfindung betrifft einen Verbund, der im wesentlichen aus Polypropylen besteht und eine Polypropylenplatte im wesentlichen mit freiwählbarem Flächengewicht umfaßt, die ein- oder beidseitig mit einer Beschichtung versehen ist, die als Polsterung, Schutz und/oder Abdeckung dient und zumindest einen Vliesstoff umfaßt.

## Beschreibung

Die Erfindung betrifft einen Polypropylenverbund.

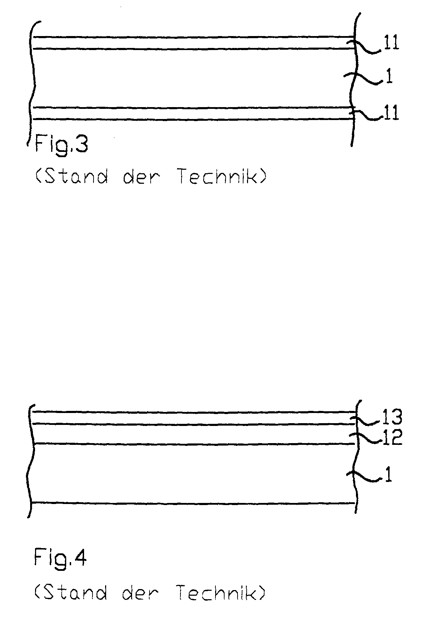

Die Verwendung von Polypropylenplatten ist weit verbreitet. So sind zur Zeit, beispielsweise, Mehrwegverpackungs- oder Transportschutzverbundstoffe im Einsatz, die Polypropylenplatten mit Beschichtungen, aus, insbesondere, vernetztem Polyethylenschaumstoff, unvernetztem Polyethylenpackschaumstoff oder einem Polyurethanschaumstoff mit einem Polyamidgewirke aufweisen. In Figur 4 ist, beispielhaft, ein bekannter Verbund dargestellt, der eine Polypropylenplatte 1, einen Polyurethanschaumstoff 12 sowie ein Polyamidgewirke 13 umfaßt, wobei die verschiedenen Materialien miteinander verklebt oder vernietet sein können. Solche Beschichtungen stellen zwar eine Polsterung von Polypropylenplatten 1 sicher, die vielfältig zum Schutz vor Beschädigungen von zu verpackenden bzw. zu transportierenden Gütern gefordert wird, jedoch ist die Verwendung mehrerer Stoffe sowohl für die Herstellung als auch die Wiederverwertung nachteilig.

Ferner ist es bekannt, Polypropylenplatten in einem Inlineverfahren mit einem oder mehreren herkömmlichen, einkomponentigen Polypropylenvlies(en) zu laminieren. Ein entsprechender Verbund ist in Figur 3 gezeigt, der eine Polypropylenplatte 1 und, beidseitig darauf laminiert, Polypropylenvliese 11 umfaßt. Zwar ist solch eine Verbund einstofflich, jedoch nutzt eine Inline-Kaschierung einen Großteil der Extrusionshitze aus, um einen Verbund herzustellen, weshalb dieses Verfahren auf Platten mit hohem Flachengewicht, d.h. einem Flächengewicht von mehr als 1200 g/m², beschränkt ist. Ferner wird bei den bekannten Inlineverfahren der Polstereffekt eines Polypropylenvliese, falls vorhanden, zerstört.

Weiterhin ist es bekannt, einen Verbund unter Verwendung einer Heißschmelzschicht oder eines Naßklebstoffs zu fixieren. Die Verwendung einer Heißschmelzfolie oder von Heißschmelzpulver fordert jedoch ebenfalls ein hohes Flächengewicht der zu beschichtenden Polypropylenplatte, damit genügend Hitze in die Platte eingebracht werden kann; und durch die Hitze und den Druck der zum Verbinden verwendeten Walzen verlieren Vliesstoffe ihren flauschigen Charakter, während die Platte einerseits deformiert wird und andererseits nach dem Abkühlen schüsselt. Die Verwendung von Lösungsmittelklebstoff ist hingegen aus umweltpolitischen Gründen nicht wünschenswert.

Der Erfindung liegt somit die Aufgabe zugrunde, einen Verbund zu liefern, der die Nachteile des Stands der Technik überwindet, d.h., daß insbesondere Polypropylenplatten mit unterschiedlichen Flächengewichten verwendbar sind, der komplette Verbund umweltfreundlich hergestellt sowie recycelbar ist und Polstereigenschaften von Vliesstoffen nicht verloren gehen.

Diese Aufgabe wir erfindungsgemäß durch einen Verbund gelöst, der im wesentlichen aus Polypropylen besteht und eine Polypropylenplatte mit im wesentlichen freiwählbarem Flächengewicht umfaßt, die ein- oder beidseitig mit einer Beschichtung versehen ist, die als Polsterung, Schutz und/oder Abdeckung dient und zumindest einen Vliesstoff umfaßt.

Dabei ist erfindungsgemäß bevorzugt, daß der Vliesstoff zumindest zwei Komponenten aufweist.

Auch schlägt die Erfindung vor, daß ein mehrkomponentiger Vliesstoff in Form eines Polypropylenlaminats oder eines Verbunds aus einem Polypropylenvlies mit einem weiteren Polypropylenmaterial ausgebildet ist.

Ferner sieht die Erfindung vor, daß der Vliesstoff als ein Flammenschutz-, Hydrophilisierungs-, Korrosionsschutz- und/oder Duftregelungsmaterial ausgebildet ist.

Eine Ausführungsform der Erfindung ist dadurch gekennzeichnet, daß die Beschichtung einen, vorzugsweise unvernetzten, Polypropylenschaumstoff umfaßt.

Dabei kann erfindungsgemäß vorgesehen sein, daß der Polypropylenschaumstoff zwischen der Polypropylenplatte und dem Polypropylenvliesstoff angeordnet ist.

Eine weitere Ausführungsform der Erfindung ist dadurch gekennzeichnet, daß die Beschichtung eine Folie umfaßt, die zu 100% aus Polypropylen oder aus Olefin besteht.

Dabei kann vorgesehen sein, daß die Folie als eine Dekor-Folie ausgebildet ist.

Ferner schlägt die Erfindung vor, daß die Folie einer Beschichtung einer Oberfläche der Polypropylenplatte auf der der Polypropylenplatte abgewandten Seite dieser Beschichtung angeordnet ist.

Auch kann erfindungsgemäß vorgesehen sein, daß die Beschichtung geflockte Polypropylenfasern umfaßt.

Weiterhin schlägt die Erfindung auch die Verwendung eines Bindemittels zum Fixieren der Beschichtung vor, das kein blockendes Haftmittel, wie einen Haftklebstoff, umfaßt.

Bevorzugt ist erfindungsgemäß, daß das Bindemittel zumindest einen olefinischen Klebstoff umfaßt.

Es kann nach der Erfindung vorgesehen sein, daß die Polypropylenplatte eine Hohlkammerplatte ist.

Ferner schlägt die Erfindung vor, daß der Verbund thermisch be- oder verarbeitbar und recycelbar ist.

Erfindungsgemäß kann auch vorgesehen sein, daß der Verbund tiefziehbar oder thermisch kantbar ist.

Schließlich ist auch vorgeschlagen, daß der Verbund, insbesondere entlang seiner Kanten, verschmelzbar, versiegelbar oder verschweißbar ist.

Der Erfindung liegt somit die überraschende Erkenntnis zugrunde, daß ein Polypropylenverbund aus Polypropylenplatten unterschiedlichster Flächengewichte mit einem zu 100% aus Polypropylen bestehenden Vliesstoff mit Polstereigenschaften herstellbar ist, wobei der Polypropylenvliesstoff vorzugsweise mit einem weiteren Polypropylenvliesstoff als Deckschicht oder Schutzschicht laminiert und auf eine Polypropylenplatte, gegebenenfalls unter Zwischenschaltung eines unvernetzten Polypropylenschaumstoffs, fixiert wird. Dabei kommt vorzugsweise ein olefinischer Klebstoff zum Einsatz.

Der erfindungsgemäße Polypropylenverbund hat somit den Vorteil, daß bei seiner Herstellung keine Polstereigenschaften zerstört werden, keine Beschränkungen bezüglich des Flächengewichts der verwendeten Polypropylenplatten besteht und eine Einstofflichkeit vorliegt, die es ermöglicht, daß der Verbund thermisch weiterverarbeitet oder wiederverwendet werden kann.

Weitere Merkmale und Vorteile der Erfindung ergeben sich aus der nachfolgenden Beschreibung, in der Ausführungsbeispiele der Erfindung im Vergleich zum Stand der Technik anhand von schematischen Zeichnungen im einzelnen erläutert sind. Dabei zeigt:
- Figur 1: eine Teilschnittdarstellung eines Polypropylenverbunds gemäß einer ersten Ausführungsform der Erfindung;
- Figur 2: eine Teilschnittdarstellung eines Polypropylenverbunds gemäß einer zweiten Ausführungsform der Erfindung;
- Figur 3: eine Teilschnittdarstellung eines Polypropylenverbunds gemäß dem Stand der Technik; und
- Figur 4: eine Teilschnittdarstellung eines weiteren bekannten Verbunds, verwendend eine Polypropylenplatte.

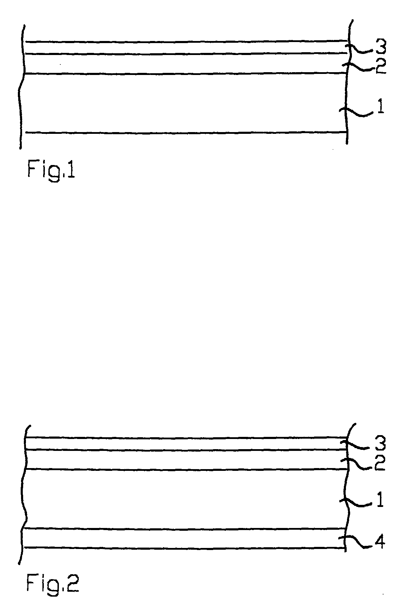

Die in Figur 1 dargestellte, erfindungsgemäße, erste Ausführungsform umfaßt eine Polypropylenplatte 1, auf die mittels eines nicht gezeigten olefinischen Klebstoffs ein Polypropylenschaumstoff 2 und ein Polypropylenvliesstoff 3 aufgebracht ist. Der Polypropylenvliesstoff 3 ist im Gegensatz zu dem Polypropylenvlies 11 mehrkomponentig und umfaßt vorzugsweise ein 2 mm dickes Nadelvlies aus 100% Polypropylen mit Polstereigenschaften, das mit einem weiteren, herkömmlichen Polypropylenvlies als Deck- oder Schutzschicht laminiert ist, so daß der Polypropylenvliesstoff 3 flauschig ist, jedoch dessen der Polypropylenplatte 1 abgewandte Oberfläche vor Beschädigungen über eine Zusatzschicht geschützt ist.

In Figur 2 ist eine zweite erfindungsgemäße Ausführungsform dargestellt, die sich von der gemäß Figur 1 dadurch unterscheidet, daß die Polypropylenplatte 1 beidseitig beschichtet ist, wobei die eine Beschichtung der der Ausführungsform von Figur 1 entspricht und die zweite Beschichtung aus einer polypropylenenthaltenden Olefinfolie besteht, die zum Beispiel als Dekor-Folie verwendbar ist.

Der einstoffliche Polypropylenverbund gemäß Figur 1 oder Figur 2 ist thermisch be- oder verarbeitbar, so daß der komplette Verbund, beispielsweise, tiefziehbar ist, seine Schneid- oder Stanzränder verschmelzbar oder mittels Ultraschall, Thermoimpulsen, Hochfrequenz oder Heißpressen verschweißbar ist oder ein thermisches Kanten ermöglicht wird. Außerdem ist der erfindungsgemäße Polypropylenverbund jederzeit problemlos recycelbar, was in Anbetracht der beschränkten Resourcen der Erde von besonderem Vorteil ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verbund, der im wesentlichen aus Polypropylen besteht und eine Polypropylenplatte (1) im wesentlichen mit freiwählbarem Flächengewicht umfaßt, die ein- oder beidseitig mit einer Beschichtung versehen ist, die als Polsterung, Schutz und/oder Abdeckung dient und zumindest einen Vliesstoff (3) umfaßt.

2. Verbund nach Anspruch 1, dadurch gekennzeichnet, daß der Vliesstoff (3) zumindest zwei Komponenten aufweist.

3. Verbund nach Anspruch 2, dadurch gekennzeichnet, daß ein mehrkomponentiger Vliesstoff (3) in Form eines Polypropylenlaminats oder eines Verbunds aus einem Polypropylenvlies mit einem weiteren Polypropylenmaterial ausgebildet ist.

4. Verbund nach einem der vorangehenden Ansprüche, dadurch gekennzeichnet, daß der Vliesstoff (3) als ein Flammenschutz-, Hydrophilisierungs-, Korrosionsschutz- und/oder Duftregelungsmaterial ausgebildet ist.

5. Verbund nach einem der vorangehenden Ansprüche, dadurch gekennzeichnet, daß die Beschichtung einen, vorzugsweise unvernetzten, Polypropylenschaumstoff (2) umfaßt.

6. Verbund nach Anspruch 5, dadurch gekennzeichnet, daß der Polypropylenschaumstoff (2) zwischen der Polypropylenplatte (1) und dem Polypropylenvliesstoff (3) angeordnet ist.

7. Verbund nach einem der vorangehenden Ansprüche, dadurch gekennzeichnet, daß die Beschichtung eine Folie (4) umfaßt, die zu 100% aus Polypropylen oder aus Olefin besteht.

8. Verbund nach Anspruch 7, dadurch gekennzeichnet, daß die Folie (4) als eine Dekor-Folie ausgebildet ist.

9. Verbund nach Anspruch 7 oder 8, dadurch gekennzeichnet, daß die Folie (4) einer Beschichtung einer Oberfläche der Polypropylenplatte (1) auf der der Polypropylenplatte (1) abgewandten Seite dieser Beschichtung angeordnet ist.

10. Verbund nach einem der vorangehenden Ansprüche, dadurch gekennzeichnet, daß die Beschichtung geflockte Polypropylenfasern umfaßt.

11. Verbund nach einem der vorangehenden Ansprüche, gekennzeichnet durch ein Bindemittel zum Fixieren der Beschichtung, das kein blockendes Haftmittel, wie einen Haftklebstoff, umfaßt.

12. Verbund nach Anspruch 11, dadurch gekennzeichnet, daß das Bindemittel zumindest einen olefinischen Klebstoff umfaßt.

13. Verbund nach einem der vorangehenden Ansprüche, dadurch gekennzeichnet, daß die Polypropylenplatte (1) eine Hohlkammerplatte ist.

14. Verbund nach einem der vorangehenden Ansprüche, dadurch gekennzeichnet, daß der Verbund thermisch be- oder verarbeitbar und recycelbar ist.

15. Verbund nach Anspruch 14, dadurch gekennzeichnet, daß der Verbund tiefziehbar oder thermisch kantbar ist.

16. Verbund nach Anspruch 14 oder 15, dadurch gekennzeichnet, daß der Verbund, insbesondere entlang seiner Kanten, verschmelzbar, versiegelbar oder verschweißbar ist.
